# EUROPÄISCHE PATENTSCHRIFT

(11) **EP 4 352 388 B1**
(45) Veröffentlichungstag und Bekanntmachung des Hinweises auf die Patenterteilung: **26.03.2025**
(21) Anmeldenummer: 22722682.6
(22) Anmeldetag: 19.04.2022
(51) Int. Cl.: F16H 63/34

(54) **BETÄTIGUNGSAKTUATOR FÜR EINE PARKSPERRE**
ACTUATOR FOR A PARKING LOCK
ACTIONNEUR POUR UN VERROU DE STATIONNEMENT

(30) Priorität: 07.06.2021 DE 102021114494
(43) Veröffentlichungstag der Anmeldung: 17.04.2024
(73) Patentinhaber: Schaeffler Technologies AG & Co. KG, 91074 Herzogenaurach (DE)
(72) Erfinder: BUNOUT, Felix, 76137 Karlsruhe (DE)
(86) Internationale Anmeldenummer: PCT/DE2022/100295
(87) Internationale Veröffentlichungsnummer: WO 2022/258097

(56) Entgegenhaltungen:
- WO-A1-2019/197742
- DE-A1- 102013 213 678
- DE-A1- 19 837 832
- US-A1- 2011 240 437

## Beschreibung

Die Erfindung betrifft einen Betätigungsaktuator für eine Parksperre, aufwsisend zumindest die folgenden Komponenten:
- ein Axialtriebmittel zum Übertragen einer Axialkraft;
- ein Betätigungselement mit einer Betätigungsachse, welches mittels der Axialkraft des Axialtriebmittels von einer Park-Position in eine Fahrt-Position axial bewegbar ist;
- ein erstes Energiespeicherelement zum Übertragen einer zu der Axialkraft antagonistischen Speicherkraft, wobei das freie Betätigungselement von der Speicherkraft in Richtung der Park-Position gezwungen wird. Der Betätigungsaktuator ist ferner so ausgestaltet, dass das Betätigungselement unabhängig von dem Axialtriebmittel in der Fahrt-Position fixierbar ist. Die Erfindung betrifft weiterhin eine Parksperre für eine Parksperrenvorrichtung eines Getriebes mit solch einem Betätigungsaktuator, eine Parksperrenvorrichtung mit einer solchen Parksperre, ein Getriebe mit einer solchen Parksperrenvorrichtung für einen Antriebsstrang, einen Antriebsstrang mit einem solchen Getriebe, sowie ein Kraftfahrzeug mit einem solchen Antriebsstrang.

Parksperren sind beispielsweise aus der DE 10 2018 115 548 A1 bekannt.

Aus der DE 10 2013 213 678 A1 ist eine Betätigungsvorrichtung für eine Parksperreneinheit bekannt, bei welcher zum Sperren der Parksperreneinheit im offenen Betriebszustand ein geringer Haltestrom für einen Elektromagneten notwendig ist. Außerdem kann ein ungewolltes Öffnen der Parksperreneinheit durch ein Nichtschalten des Elektromagneten verhindert werden.

Kraftfahrzeuge mit Parksperre, beispielsweise mit sogenannter by-wire Parksperre, in normal-gesperrter Konfiguration, also mit blockiertem Fahrwerk bei Systemausfall, welche im Produktionswerk lange Zeit verweilen, sind im Werk bei der Montage nicht ohne Energieversorgung frei verschiebbar. Es besteht die Notwendigkeit die Montagereihenfolge anzupassen und/oder eine temporäre Energieversorgung einzurichten. Eine Lösung dafür ist beispielsweise ein Entriegelungselement. Ein solches Entriegelungselement wird meist separat, beispielsweise von Hand mittels einer (selbsthemmenden) Schraube betätigt. Somit ist eine Verschiebbarkeit des Kraftfahrzeugs sichergestellt. Allerdings muss für die Inbetriebnahme sichergestellt sein, dass die Parksperre wieder ordnungsgemäß normal (beispielsweise bei Systemausfall) das Fahrwerk blockiert. Dies unterliegt entweder menschlicher Kontrolle und ist somit fehleranfällig, oder es ist ein zusätzlicher Aufwand für eine Messsensorik an dem Entriegelungselement notwendig.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus dem unabhängigen Anspruch 1, zu dem vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen, wobei die Erfindung durch die nachfolgenden Ansprüche bestimmt wird.

Die Erfindung betrifft einen Betätigungsaktuator für eine Parksperre, aufweisend zumindest die folgenden Komponenten:
- ein Axialtriebmittel zum Übertragen einer Axialkraft;
- ein Betätigungselement mit einer Betätigungsachse, welches mittels der Axialkraft des Axialtriebmittels von einer Park-Position in eine Fahrt-Position axial bewegbar ist;
- ein erstes Energiespeicherelement zum Übertragen einer zu der Axialkraft antagonistischen Speicherkraft, wobei das freie Betätigungselement von der Speicherkraft in Richtung der Park-Position gezwungen wird.

Der Betätigungsaktuator ist ferner so ausgestaltet, dass das Betätigungselement unabhängig von dem Axialtriebmittel in der Fahrt-Position fixierbar ist. Die vorliegende Erfindung zeichnet sich dadurch aus, dass das Axialtriebmittel einen Führungsstift umfasst, das Betätigungselement hülsenartig ausgeführt ist, und vorzugsweise eine Hülse ist, und das hülsenartige Betätigungselement von dem Führungsstift geführt ist.

Es wird im Folgenden auf die genannte Betätigungsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Der hier vorgeschlagene Betätigungsaktuator umfasst ein Axialtriebmittel, beispielsweise einen elektrischen Aktuator mit einem Spindeltrieb oder einen Nehmerkolben eines fluidischen, also pneumatischen oder hydraulischen, Betätigungssystems. Mittels des Axialtriebmittels ist entlang einer Betätigungsachse eine Axialkraft ausübbar und auf das Betätigungselement übertragbar. Das Betätigungselement umfasst beispielsweise ein Stößel beziehungsweise Stab, eine axial bewegbare Spindel oder eine axial bewegbare Spindelmutter. Das Betätigungselement ist zum Übertragen der Axialkraft des Axialtriebmittels auf einen Sperrmechanismus eingerichtet. Das Betätigungselement ist entlang einer Betätigungsachse bewegbar geführt, welches mittels des Axialtriebmittels von einer (normalen) ersten Position, hier der Park-Position, in eine (ausgelenkte) zweite Position, hier der Fahrt-Position, axial bewegbar ist. In einer bevorzugten Ausführungsform ist das Betätigungselement ausschließlich passiv von der zu der Axialkraft des Axialtriebmittels antagonistischen Speicherkraft des ersten Energiespeicherelements in die (normale) Park-Position zurückführbar. Alternativ ist das Betätigungselement zusätzlich von dem Axialtriebmittel von der (ausgelenkten) Fahrt-Position in die Park-Position zurückführbar. Die mittels des Betätigungselements übertragbare Axialkraft des Axialtriebmittels ist zum Überwinden einer antagonistischen Kraft des ersten Energiespeicherelements und eines Sperrmechanismus eingerichtet, wobei damit ein (normal-sperrender) Sperrmechanismus aus dem sperrenden Zustand (entspricht der Park-Position) in den freien Zustand (entspricht der Fahrt-Position) überführbar ist. Das (erste) Energiespeicherelement ist beispielsweise als eine Schraubendruckfeder, Tellerfeder, Magnetfeder oder Gasdruckfeder ausgeführt. Bevorzugt ist das erste Energiespeicherelement als Schraubendruckfeder mit zu der Betätigungsachse paralleler oder koaxialer Federachse ausgeführt.

Gemäß der vorliegenden Erfindung wird vorgeschlagen, dass das Betätigungselement unabhängig von dem Axialtriebmittel in der Fahrt-Position fixierbar ist. Dazu sind das Betätigungselement und das Axialtriebmittel mehrteilig, bevorzugt zweiteilig, ausgeführt. Damit lässt sich das Betätigungselement, beispielsweise in einem Passivzustand des Kraftfahrzeugs, (bevorzugt von einem Entriegelungselement) in die Fahrt-Position überführen, ohne dabei das Axialtriebmittel mitführen zu müssen beziehungsweise das Axialtriebmittel wieder die der Park-Position entsprechende Lage einnehmen kann, während das Betätigungselement in der Fahrt-Position verbleibt.

In einer Ausführungsform ist das Betätigungselement derart eingerichtet, dass es selbsthemmend in der Fahrt-Position verbleibt, beispielsweise mittels einer Einrastkerbe in dem Betätigungselement, welche erst bei einem Überhub des Axialtriebmittels in Eingriff gebracht ist. In einer Ausführungsform ist ein Feststellelement vorgesehen, mittels welchem das Betätigungselement (zumindest, bevorzugt allein) in der Fahrt-Position fixierbar ist. Das Feststellelement ist separat bedienbar, beispielsweise von Hand. In einer bevorzugten Ausführungsform ist ein weiteres Bauteil, beispielsweise ein Greifelement oder ein Arretierstift vorgesehen und dazu eingerichtet, das Betätigungselement in der Fahrt-Position zu fixieren. Um das Betätigungselement in die Fahrt-Position zu überführen, wird in einer Ausführungsform das Betätigungselement mittels des Axialtriebmittels in die Fahrt-Position bewegt. In einer bevorzugten Ausführungsform wird das Betätigungselement aus seiner Park-Position in die Fahrt-Position unabhängig von dem Axialtriebmittel bewegt. Beispielsweise ist ein Entriegelungselement vorgesehen, mittels welchem das Betätigungselement aus der Park-Position in die Fahrt-Position bewegbar ist.

Es wird weiterhin eine Ausführungsform des Betätigungsaktuators beansprucht, die vorsieht, dass das Betätigungselement von dem Axialtriebmittel geführt ist, wobei bevorzugt das Betätigungselement eine Hülse ist.

In einer Ausführungsform ist dann das Axialtriebmittel eine Schiene und das Betätigungselement ein auf der Schiene in axialer Richtung bewegbarer Schlitten. In einer Ausführungsform ist das Betätigungselement in der Fahrt-Position und dem Axialtriebmittel in jener der Park-Position entsprechenden Lage frei von der Führung mittels des Führungsstifts des Axialtriebmittels. In einer bevorzugten Ausführungsform ist das Betätigungselement auch dann noch von dem Führungsstift des Axialtriebmittels geführt, wenn das Betätigungselement sich in der Fahrt-Position befindet und sich das Axialtriebmittel unabhängig davon in jener der Park-Position entsprechenden Lage befindet.

In einer bevorzugten Ausführungsform ist das Betätigungselement eine Hülse.

Die Hülse ist von dem Führungsstift des Axialtriebmittels Teleskop-artig geführt.

Weiter kann vorgesehen sein, dass der Führungsstift in der Park-Position vollständig in das hülsenartige Betätigungselement eintaucht.

Es wird weiterhin in einer vorteilhaften Ausführungsform des Betätigungsaktuators vorgeschlagen, dass der Betätigungsaktuator weiterhin zumindest die folgenden Komponenten aufweist:
- ein Stopperelement;
- eine zu dem Stopperelement korrespondierende Stopperkomponente; sowie
- ein Halteelement, welches zwischen einer gelösten Stellung und einer sperrenden Stellung bewegbar ist, wobei während sich das Betätigungselement in der Fahrt-Position befindet mit dem Halteelement in der sperrenden Stellung das Stopperelement und die Stopperkomponente zueinander fixiert sind,
wobei mittels des durch das Halteelement in der sperrenden Stellung fixierten Stopperelements, das Betätigungselement entgegen der Speicherkraft des ersten Energiespeicherelements in der Fahrt-Position gehalten ist.

Um den jeweiligen Zustand des Sperrmechanismus energiearm halten zu können, ist hier ein Stopperelement vorgeschlagen, welches mit einer korrespondierenden Stopperkomponente derart zusammenwirkend eingerichtet ist, dass eine reibschlüssige und/oder formschlüssige Verbindung gebildet ist. In einer Ausführungsform ist das Stopperelement mit dem Axialtriebmittel beziehungsweise mit dem Betätigungselement fixiert sowie die Stopperkomponente zumindest während der Fahrt-Position des Betätigungselements axial zu einem Gegenlager des Axialtriebmittels fixiert. Alternativ ist dies andersherum ausgeführt. In einer Ausführungsform ist das Stopperelement von zumindest einer Lasche mit einer Kontaktstelle gebildet, wobei die Kontaktstelle zum Aufbringen der Haltekraft mit der korrespondierenden Stopperkomponente in Kontakt bringbar ist. In einer Ausführungsform ist zusätzlich eine (bevorzugt schaltbare) magnetische (Stopper-) Kraft erzeugt, mit welcher die aus dem Formschluss und/oder Reibschluss resultierende Stopperkraft unterstützt ist. In einer Ausführungsform ist mit der Stopperkraft eine die Axialkraft ergänzende Kraft vorgehalten, und mittels der beziehungsweise während des Vohaltens der Stopperkraft die (erforderliche) Axialkraft zum Überwinden der oben genannten antagonistischen Speicherkraft reduzierbar und folglich die Energieaufnahme des Betätigungsaktuators reduziert. In einer anderen Ausführungsform ist die Stopperkraft (ohne die Mitwirkung des Halteelements) bis zu vernachlässigbar gering, wobei bevorzugt keine magnetische Kraft zwischen dem Stopperelement und der korrespondierenden Stopperkomponente vorgehalten ist.

Die (in der Fahrt-Position fixierte) korrespondierende Stopperkomponente (beziehungsweise Stopperelement) ist in einer bevorzugten Ausführungsform axial fixiert und damit relativ zu dem Gegenlager des Axialtriebmittels (beispielsweise dem Fluidikzylinder eines Nehmerkolbens) fest. In einer alternativen Ausführungsform ist die korrespondierende Stopperkomponente mit dem Axialtriebmittel beziehungsweise mit dem Betätigungselement mitbewegbar und in der Fahrt-Position mittels eines Anschlags fixiert.

Die Stopperkraft muss für eine Sicherstellung der Einnahme des normalen Zustands der Parksperre (normal-sperrend) geringer sein als die zu der Axialkraft des Axialtriebmittels antagonistische Speicherkraft des ersten Energiespeicherelements (gegebenenfalls in Summe mit der antagonistischen Kraft des Sperrmechanismus), wobei die antagonistische (Summen-) Kraft zum Überführen des Betätigungselements von der (ausgelenkten) Fahrt-Position in die (normale) Park-Position übertragbar ist. Bei einer normal-sperrenden Konfiguration der Parksperre wird also aktiv von der Axialkraft die Parksperre von dem (normalen) sperrenden Zustand in den (abweichenden) freien Zustand überführt, wobei also die Park-Position des Betätigungselements dem sperrenden Zustand und die Fahrt-Position dem freien Zustand entspricht. In der Park-Position muss oder wird keine Axialkraft ausgeübt, sodass von dem Axialtriebmittel keine externe Energieaufnahme notwendig ist. Die Park-Position des Betätigungselements ist mittels der Speicherkraft des ersten Energiespeicherelements gesichert. Zum Überführen des Betätigungselements in die Fahrt-Position ist eine Axialkraft notwendig, wobei hierfür also eine externe Energieaufnahme notwendig ist.

Damit die Stopperkraft ausreichend ist, um das Betätigungselement in der (ausgelenkten) Fahrt-Position zu halten, ist hier vorgeschlagen, dass weiterhin ein Halteelement vorgesehen ist. Das Halteelement ist zwischen einer sperrenden Stellung und einer gelösten Stellung bewegbar. Mittels des Halteelements ist in der sperrenden Stellung der Zustand der korrespondierenden Stopperkomponente und des Stopperelements in dem Zustand fixiert, welcher der (ausgelenkten) Fahrt-Position des Betätigungselements entspricht. Dann ist also von dem Halteelement eine solche Kraft übertragen, dass die daraus resultierende Stopperkraft ausreichend ist, um die zu der Axialkraft des Axialtriebmittels antagonistische Kraft zu überwinden. Bei einem reinen Reibschluss zwischen dem Stopperelement und der korrespondierenden Stopperkomponente ist bevorzugt von dem Halteelement eine zusätzliche Haltekraft zum Steigern der Reibhaftung aufgebracht, besonders bevorzugt mittels einer Kulisse, beispielsweise einer Rampenform an dem Halteelement und/oder an dem Stopperelement. Zumindest ist von dem Halteelement ein Formschluss derart mit dem Stopperelement gebildet, dass das Stopperelement an einer Ausweichbewegung gehindert ist. Die Möglichkeit einer Ausweichbewegung (ohne Einwirken des Halteelements) ist gewollt, sodass sich die Verbindung zwischen dem Stopperelement und der korrespondierenden Stopperkomponente (unter dem Einfluss der antagonistischen Speicherkraft oder Summenkraft) selbsttätig löst, sobald das Halteelement sich in der gelösten Stellung befindet und die Axialkraft des Axialtriebmittels ausreichend gering, bevorzugt minimal (beispielsweise null oder negativ), ist.

In einer Ausführungsform ist die (korrespondierende) Stopperkomponente mittels eines Hinterschnitts (bezogen auf die Betätigungsachse), beispielsweise mittels einer Nut, gebildet. In einer Ausführungsform ist die Kontaktstelle des Stopperelements eine Erhebung, bevorzugt an einer Spitze des als Lasche ausgeführten Stopperelements, welche zum Bilden eines Formschlusses axial hinter den Hinterschnitt, beispielsweise eine Nut, versenkbar ist. In einer Ausführungsform ist das Stopperelement von zumindest einer Federlasche mit axialer Haupterstreckung und radialer Federrichtung gebildet. In einer bevorzugten Ausführungsform ist für eine Vermeidung von Kippkräften quer zu der Betätigungsachse eine zu der Betätigungsachse symmetrische Anordnung von Teilelementen des Stopperelements und der Stopperkomponente, sowie bevorzugt des Halteelements, gebildet, besonders bevorzugt eine Ring-artige Anordnung. Beispielsweise umfasst das Stopperelement eine Mehrzahl von (bevorzugt Feder-) Laschen und die korrespondierende Stopperkomponente eine komplementäre Aufnahme, beispielsweise eine umlaufende Gegenfläche beziehungsweise Hinterschnitt (beispielsweise Nut). Das Halteelement ist dann bevorzugt ebenfalls komplementär zu der Mehrzahl der Laschen oder Ring-förmig gebildet.

Die zumindest eine Federlasche ist beispielsweise aus einem metallischen Werkstoff, beispielsweise einem Federblech, hergestellt. In einer anderen Ausführungsform ist die Federlasche aus einem Kunststoff hergestellt. In einer bevorzugten Ausführungsform ist die zumindest eine Federlasche von dem Stopperelement einstückig umfasst.

In einer Ausführungsform ist das Betätigungselement derart eingerichtet, dass es selbsthemmend in der (ausgelenkten) Fahrt-Position verbleibt, beispielsweise mittels des Stopperelements, der Stopperkomponente und des Halteelements. Alternativ ist ein weiteres Mittel zum Halten des (separaten) Betätigungselements vorgesehen. In letzterem Fall ist bevorzugt das Axialtriebmittel selbst mittels des Stopperelements, der Stopperkomponente und des Halteelements in der Fahrt-Position haltbar und das Betätigungselement ist dann einzig mittelbar über das Axialtriebmittel in der Fahrt-Position fixiert. Das Betätigungselement ist dann nicht nur separat von dem Axialtriebmittel, sondern zudem separat in der (ausgelenkten) Fahrt-Position fixierbar.

Es wird weiterhin in einer vorteilhaften Ausführungsform des Betätigungsaktuators für eine Parksperre vorgeschlagen, dass weiterhin ein Hubmagnet mit einer Spule und einem mittels einer von der Spule erzeugbaren Magnetkraft axial bewegbaren Hubkolben vorgesehen ist,
wobei das Halteelement mit dem axial bewegbaren Hubkolben fest verbunden ist.

Hier ist nun vorgeschlagen, dass weiterhin ein Hubmagnet mit einer Spule und einem mittels einer von der Spule erzeugbaren Magnetkraft axial bewegbaren Hubkolben vorgesehen ist, wobei das Halteelement mit dem axial bewegbaren Hubkolben fest verbunden ist. Somit ist mit einer Bestromung der Spule ein solches Magnetfeld mit einer auf das Halteelement resultierenden Magnetkraft (abschaltbar) induzierbar, sodass bei Anliegen der Magnetkraft das Halteelement aus der sperrenden Stellung in die gelöste Stellung überführt wird. Damit ist eine elektronische Schaltbarkeit des Fixierens des Betätigungselements in der Fahrt-Position geschaffen. In einer Ausführungsform sind das Halteelement und der Hubkolben einstückig miteinander gebildet.

Es wird weiterhin in einer vorteilhaften Ausführungsform des Betätigungsaktuators vorgeschlagen, dass das Betätigungselement einen Positionsmagneten für einen Magnetfeldsensor umfasst.

Gemäß der hier vorgeschlagenen Ausführungsform wirken der Positionsmagnet (Permanentmagnet) mit dem Magnetfeldsensor derart zusammen, dass mittels des Magnetfeldsensors die aktuelle Position oder zumindest eine der Positionen des Betätigungselements eindeutig bestimmbar ist. In einer Ausführungsform ist der Magnetfeldsensor derart eingerichtet, dass ein Passiv-Signal (beispielsweise kein Signal) ausgegeben wird, wenn sich der Positionsmagnet nicht im Erfassungsbereich des Magnetfeldsensors befindet. Das Passiv-Signal ist dann so interpretiert, dass das Betätigungselement beispielsweise sich in der Park-Position befindet, und bei aktiver Abfrage (beispielsweise in einem Kraftfahrzeug bei mittels Zündschlüssel aktivierter Elektronik) dieser gesperrte Zustand ausgegeben wird, beispielsweise als Schallsignal und/oder Leuchtsymbol. In einer bevorzugten Ausführungsform wird eine Warnung ausgegeben, wenn sich das Betätigungselement in der Fahrt-Position befindet, oder allein dann, wenn die Positionen des Betätigungselements (in Fahrt-Position) und des Axialtriebmittels (entsprechend der Park-Position) auseinanderfallen. Beispielsweise wird die Lage des Axialtriebmittels über einen Drucksensor (fluidischer Antrieb) oder einen Umdrehungszähler (Spindeltrieb) festgestellt.

Der Positionsmagnet ist beispielsweise ein separates Bauteil, welches von dem hülsenartigen Betätigungselement aufgenommen ist, beispielsweise in dem hülsenartigen Betätigungselement eingesteckt und sicher positioniert ist. In einer anderen Ausführungsform ist der Positionsmagnet auf der radial-äußeren Fläche des Betätigungselements aufgebracht und/oder eingebracht. Der Magnetfeldsensor ist beispielsweise an den Betätigungsaktuator angebracht, beispielsweise verschraubt, sodass der Magnetfeldsensor definiert zum Positionsmagnet ausgerichtet ist. Magnetfeldsensor und Betätigungsaktuator bilden somit eine Baugruppe, welche in der Fertigung in ein Kraftfahrzeug einfach verbaut werden kann, ohne im Nachhinein den Magnetfeldsensor zu dem Positionsmagneten ausrichten zu müssen.

Gemäß einem weiteren Aspekt wird eine Parksperre für eine Parksperrenvorrichtung eines Getriebes vorgeschlagen, aufweisend zumindest die folgenden Komponenten:
- einen Sperrmechanismus zum Sperren eines Sperrenrads in einem Drehmomentfluss, wobei im Einsatz von dem Sperrmechanismus in einem sperrenden Zustand das Sperrenrad blockiert und in einem freien Zustand das Sperrenrad freigegeben ist;
- einen Betätigungsaktuator nach einer Ausführungsform gemäß der obigen Beschreibung, wobei in der Fahrt-Position des Betätigungselements der Sperrmechanismus aus dem sperrenden Zustand herausgeführt ist und wobei die Park-Position des Betätigungselements dem sperrenden Zustand des Sperrmechanismus entspricht;
- ein vom Betätigungsaktuator umfasstes Rastelement und eine komplementäre Rastaufnahme zum Halten des Betätigungselements in der Fahrt-Position; wobei
- das Rastelement fest mit dem Axialtriebmittel verbunden ist,
- ein vom Axialtriebmittel unabhängig betätigbares ein Entriegelungselement, welches zwischen einer normalen Position und einer entriegelnden Position bewegbar ist, wobei in der entriegelnden Position der freie Zustand des Sperrmechanismus gehalten ist und in der normalen Position die normal-sperrende Funktion der Parksperre sichergestellt ist;
- das Entriegelungselement das hülsenartige Betätigungselement aus der Park-Position in die Fahrt-Position bewegt und
- das Rastelement mit dem Axialtriebmittel fest verbunden ist und sowohl Rastelement , als auch Axialtriebmittel in eine der Park-Position entsprechenden Lage verbleiben oder zurückkehren, wenn das hülsenartige Betätigungselement vom Entriegelungselement in der Fahrt-Position gehalten ist..

Die hier vorgeschlagene Parksperre ist derart eingerichtet, dass der Sperrmechanismus das Sperrenrad in einem sperrenden Zustand blockiert und nur in einem freien Zustand das Sperrenrad von dem Sperrmechanismus freigegeben ist.

In dem freien Zustand ist das Sperrenrad frei rotierbar, beispielsweise eingesetzt in einem Getriebe eines Kraftfahrzeugs, das Kraftfahrzeug ist dann rollbar. Es sei darauf hingewiesen, dass das Sperrenrad in einem Drehmomentfluss eines Getriebes integriert ist. Ist das Betätigungselement in den sperrenden Zustand hereingeführt, erfolgt mittels des Sperrmechanismus eine Sperrung des Drehmomentflusses und das Getriebe ist blockiert. In dem sperrenden Zustand des Sperrenrads ist in einem solchen Einsatz in einem Getriebe das Kraftfahrzeug also nicht rollbar. Die Parksperre umfasst einen Betätigungsaktuator mit einem Betätigungselement, welches mit dem Sperrmechanismus verbunden ist. Dabei ist das Betätigungselement derart mit dem Sperrmechanismus verbunden, dass mit dem Betätigungselement in der Fahrt-Position der von dem normalen Zustand abweichenden Zustand im Sperrmechanismus vorliegt. Bei einer Parksperre in normal-sperrender Konfiguration ist also mittels des Betätigungsaktuator aktiv der freie Zustand herbeiführbar. Der von dem normalen Zustand abweichende Zustand muss jedoch nicht aktiv (also unter externer Energieaufnahme) gehalten werden, sondern wird passiv von dem Stopperelement und der Stopperkomponente mit Unterstützung des Halteelements gehalten. Wenn die Spule des Hubmagnets bestromt wird, wird das Stopperelement von der Stopperkomponente getrennt und somit (bevorzugt passiv) das Betätigungselement von der Fahrt-Position in die Park-Position überführt. Der Sperrmechanismus ist somit frei von dem abweichenden Zustand in den normalen Zustand zurückzukehren.

Die Parksperre ist beispielsweise elektrisch und/oder fluidisch, beispielsweise pneumatisch oder hydraulisch, aktuiert und bei einem Ausfall der Elektronik beziehungsweise einem Abfall eines fluidischen Drucks beziehungsweise fluidischen Volumens, wird der Sperrmechanismus in den normalen (bevorzugt sperrenden) Zustand überführt. Bei einer Parksperre in normal-sperrender Konfiguration ist dann das Sperrenrad blockiert. Um dies während eines Passivzustands (beispielsweise bei einem Kraftfahrzeug während der Fertigung, des Transports oder in einer Werkstatt) abzuschalten, ist hier vorgeschlagen, dass ein Entriegelungselement vorgesehen ist, welches zwischen zwei Positionen (beispielsweise als Schwenkhebel ausgeführt um eine Schwenkachse gelagert) bewegbar ist. Dabei ist das Entriegelungselement derart eingerichtet, dass mit dem Entriegelungselement in der entriegelnden Position ohne externe Energieaufnahme der abweichende (beispielsweise freie) Zustand des Sperrmechanismus haltbar ist. In diesem Passivzustand ist damit sichergestellt, dass, wenn die (normal-sperrende) Parksperre in einem Getriebe eines Kraftfahrzeugs eingesetzt ist, das Kraftfahrzeug weiterhin rollbar bleibt. Um diesen Passivzustand aufzuheben, welcher im Betrieb der Parksperre eben unerwünscht ist, ist das Entriegelungselement wieder (bevorzugt wiederholt) deaktivierbar, also in die normale Position überführbar.

In einer bevorzugten Ausführungsform ist zusätzlich ein Feststellelement vorgesehen. Das Feststellelement ist dazu eingerichtet, das Entriegelungselement in der entriegelnden Position zu halten. Wenn das Feststellelement das Entriegelungselement nicht in der entriegelnden Position hält, ist der freie Zustand des Sperrmechanismus von dem Entriegelungselement nicht (passiv) haltbar. Das heißt, dass die entriegelnde Position der abweichende (und damit bei einer Parksperre in normal-sperrender Konfiguration der freie) Zustand des Sperrmechanismus einzig im Zusammenwirken von dem Entriegelungselement und dem Feststellelement (dauerhaft) einstellbar ist.

Insbesondere kann vorgesehen sein, dass das hülsenartige Betätigungselement als Hülse ausgebildet wird, die zum Überführen der Parksperre in die Fahrt-Position in Richtung Parksperre verlagert wird. Die Hülse kann dabei auf einem Führungsstift angeordnet sein, der widerum fest mit einem Nehmerkolben verbunden ist. Der Nehmerkolben ist dabei Bestandteil des Axialtriebmittels. Die Hülse kann dann sowohl vom Nehmerkolben des Axialtriebmittels als auch unabhängig hiervon von einem Entriegelungselement verlagert werden. Das Entriegelungselement ist dabei unabhängig vom Axialtriebmittel und kann bevorzugt auch manuell betätigt werden, so dass auch dann eine Verlagerung der Hülse und damit eine Überführung der Parksperre in die Fahrt-Position möglich ist, wenn z.B. wegen Stromausfall oder Hydraulikfehler keine Betätigung des Axialtriebmittels möglich ist.

Bei einer entsprechenden Betätigung der Hülse, bzw. des hülsenartigen Betätigungselements mittels des Entriegelungselements kann das Betätigungselement unabhängig vom Nehmerkolben und auch Führungsstift in Richtung der Parksperre verlagert werden. Insbesondere findet eine teleskopartige Verlagerung auf und relativ zum Führungsstift statt. Da weiter vorgesehen sein kann, dass nicht das Axialtriebmittel oder der Führungsstift einen Positionmagneten trägt, sondern gerade das hülsenartige Betätigungselement, kann auch bei einer entsprechenden Betätigung, bspw. manuellen Betätigung durch das Entriegelungselement auf eine Parksperre in Fahrt-Position geschlossen werden.

Weiter kann vorgesehen sein, dass bei einer Betätigung der Parksperre über den Parksperrenaktuator, bzw. das Axialtriebmittel eine Rastiervorrichtung vorgesehen ist, die einen Teil des Axialtriebmittels in der Lage hält, die der Fahrt-Position entspricht. Diese Rastiervorrichtung kann z.B. ein Rastierelement und eine komplementäre Rastaufnahme umfassen. Das Rastierelement kann ein Stopperelement und die Rastaufnahme eine korrspondierende Stopperkomponente sein. Es kann dann vorteilhaft vorgesehen sein, dass das Rastierelement mit einem Teil des Axialtriebmittels, vorzugsweise mit einem Nehmerkolben fest verbunden ist. Wird nun das Betätigungselement statt mit dem Axialtriebmittel, mit dem Entriegelungselement betätigt, so wird der Nehmerkolben, bzw. das Teil des Axialtriebmittels nicht axial verlagert und die Rastiervorrichtung wird nicht aktiviert. Dieses kann besonders bevorzugt dann vorgesehen sein, wenn gleichzeitig vorgesehen ist, dass die Rastiervorrichtung in einer Normalstellung sperrend ausgebildet ist und erst durch Energieeintrag deaktiviert wird. Hierfür kann entsprechend ein magnetisch aktuierbares Halteelement vorgesehen sein, dass im stromlosen Fall des Magneten, bzw. einer Spule das Rastierelement und die Rastaufnahme zueinander sperrt. Bei einer Betätigung über das Entriegelungselement verbleibt dann das Rastierelement in der, der Park-Position entsprechenden Lage und die Park-Position der Parksperre kann auch ohne Energieeintrag alleine über eine entprechende Betätigung über das Entriegelungselement hergestellt werden.

Gemäß einem weiteren Aspekt wird eine Parksperrenvorrichtung vorgeschlagen, aufweisend
ein Sperrenrad zum Anordnen in einem sperrbaren Drehmomentfluss und eine Parksperre nach einer Ausführungsform gemäß der obigen Beschreibung, wobei das Sperrenrad mittels des Sperrmechanismus blockierbar ist.

Die hier vorgeschlagene Parksperrenvorrichtung umfasst eine Parksperre und ein korrespondierendes Sperrenrad. Das Sperrenrad ist in dem Antriebsstrang eines Kraftfahrzeugs, bevorzugt in einem Getriebe, integriert und gemäß vorhergehender Beschreibung mittels des Sperrmechanismus blockierbar, sodass es an einer Drehbewegung um seine Radachse gehindert ist.

In einer Ausführungsform bilden die Parksperre und das Sperrenrad eine Baueinheit. Eine solche Baueinheit ist für den Einbau als zusammenhängendes Bauteil auslieferbar und ohne die Notwendigkeit, diese Baueinheit wieder auseinanderzunehmen, am vorgesehenen Montageort, beispielsweise in einem Kraftfahrzeug, montierbar. In einer Ausführungsform ist der Sperrmechanismus, und in einer Ausführungsform auch das Sperrenrad, eine Baueinheit, während der Betätigungsaktuator separat gebildet ist, wobei in einer Ausführungsform der Betätigungsaktuator eine separate weitere Baueinheit bildet.

Das Sperrenrad ist im Einbau in einem Antriebsstrang derart angeordnet, dass zumindest einer der Verbraucher an einer Drehmomentweitergabe beziehungsweise Drehmomentaufnahme gehindert ist, wenn sich der Sperrmechanismus in dem sperrenden Zustand befindet, also das Sperrenrad blockiert ist.

Gemäß einem weiteren Aspekt wird ein Getriebe für einen Antriebsstrang vorgeschlagen, aufweisend zumindest die folgenden Komponenten:
- eine Parksperrenvorrichtung nach einer Ausführungsform gemäß der obigen Beschreibung;
- ein Drehmomentübertragungsgetriebe, welches das Sperrenrad umfasst; und
- ein Getriebegehäuse, welches einen Getrieberaum umgibt,
wobei der Sperrmechanismus der Parksperre, bevorzugt vollständig, besonders bevorzugt die gesamte Parksperrenvorrichtung, in dem Getrieberaum angeordnet ist.

Das Getriebe, beispielsweise ein Automatikgetriebe für einen Antriebsstrang eines Kraftfahrzeugs, umfasst das Sperrenrad. Beispielsweise bildet das Sperrenrad ein Stirnrad eines als schaltbares Übersetzungsgetriebe ausgeführten Drehmomentübertragungsgetriebes. Das Getriebe weist einen Drehmomenteingang, beispielsweise eine oder mehrere Getriebeeingangswellen, und einen Drehmomentausgang, beispielsweise eine oder mehrere Getriebeausgangswellen, auf. Im Getriebe wird das Drehmoment umgelenkt, untersetzt, übersetzt und/oder abnahmegerecht verteilt (als Differential).

In einer Ausführungsform umfasst das Getriebe eine Kupplung, beispielsweise eine Reibkupplung oder eine Klauenkupplung, im Drehmomentfluss. Der Drehmomenteingang ist antriebsmaschinenseitig und der Drehmomentausgang ist verbraucherseitig angeordnet. Die Drehmomentrichtung ist jedoch auch umgekehrt von einem (bei einer Rekuperation) Verbraucher hin zu einer Antriebsmaschine beziehungsweise einem Generator möglich. Es wird weiterhin in einer vorteilhaften Ausführungsform des Getriebes vorgeschlagen, dass die Parksperre insgesamt oder einzig der Sperrmechanismus in einen von einem Getriebegehäuse gebildeten Getrieberaum des Getriebes integriert ist.

Gemäß einem weiteren Aspekt wird ein Antriebsstrang vorgeschlagen, aufweisend zumindest die folgenden Komponenten:
- zumindest eine Antriebsmaschine zum Abgeben eines Drehmoments;
- zumindest einen Verbraucher zum Aufnehmen eines Drehmoments; und
- ein Getriebe nach einer Ausführungsform gemäß der obigen Beschreibung,

wobei die zumindest eine Antriebsmaschine und der zumindest eine Verbraucher mittels des Getriebes drehmomentübertragend miteinander verbunden sind,
wobei ein Drehmomentübertragen zwischen der Antriebsmaschine und dem zumindest einen Verbraucher mittels der Parksperrenvorrichtung in dem sperrenden Zustand des Sperrmechanismus unterbunden ist.

Der hier vorgeschlagene Antriebsstrang umfasst zumindest eine Antriebsmaschine, beispielsweise eine Verbrennungskraftmaschine und/oder eine elektrische Antriebsmaschine, welche zumindest in einem Hauptzustand die Drehmomentquelle eines Drehmomentflusses bildet. Weiterhin ist zumindest ein Verbraucher umfasst, beispielsweise Vortriebsräder eines Kraftfahrzeugs, welcher zumindest in einem Hauptzustand die Drehmomentsenke des Drehmomentflusses bildet. Zwischengeschaltet ist ein Getriebe nach einer Ausführungsform gemäß der vorhergehenden Beschreibung, über welches der (bevorzugt gesamte radseitige) Drehmomentfluss geleitet ist. Ist das Getriebe gesperrt, so ist der Drehmomentfluss gesperrt und eine Drehmomentübertragung in dem Antriebsstrang zwischen Drehmomentquelle und Drehmomentsenke unterbunden.

Der hier vorgeschlagene Antriebsstrang umfasst ein Getriebe, welches eine solche Parksperrenvorrichtung aufweist, mit welcher sowohl die Fahrt-Position (freier Zustand) als auch die Park-Position (sperrender Zustand) passiv, also ohne externe Energieaufnahme, haltbar ist. Das Getriebe ist mit gleichem Bauraum und mit nur geringfügigen Zusatzkosten im Vergleich zu einer Parksperrenvorrichtung ohne die Möglichkeit zur Entriegelung ausführbar. Zudem ist die Sicherheit hoch, dass der Antriebsstrang nur dann in Betrieb genommen wird, solange die Parksperrenvorrichtung entriegelt ist.

Gemäß einem weiteren Aspekt wird ein Kraftfahrzeug vorgeschlagen, aufweisend zumindest ein Vortriebsrad und einen Antriebsstrang nach einer Ausführungsform gemäß der obigen Beschreibung,
wobei zum Vortrieb des Kraftfahrzeugs ein Drehmoment von der zumindest einen Antriebsmaschine des Antriebsstrangs an das zumindest eine Vortriebsrad abgebbar ist, und
ein Rollen des Kraftfahrzeugs mittels der Parksperrenvorrichtung in dem sperrenden Zustand des Sperrmechanismus unterbunden ist.

Das Kraftfahrzeug ist beispielsweise ein Personenkraftwagen, ein Lastkraftwagen oder ein motorisiertes Zweirad. Das Kraftfahrzeug weist einen Antriebsstrang nach einer Ausführungsform gemäß der vorhergehenden Beschreibung. Das von der zumindest einen Antriebsmaschine abgebbare Drehmoment wird über das Getriebe an das zumindest eine Vortriebsrad (Verbraucher) abgegeben. Das hier bezeichnete Getriebe ist bevorzugt ein schaltbares Übersetzungsgetriebe. Alternativ ist das Getriebe beispielsweise ein festes Übersetzungsgetriebe, also mit unveränderbarer Übersetzung, oder ein Differential oder eine Rutschkupplung. Die hier vorgeschlagene Parksperrenvorrichtung ist bevorzugt wie oben beschrieben ausgeführt und besonders bevorzugt in das Getriebe integriert.

Eine Drehbewegung des zumindest einen Vortriebsrads ist in einer Parkschaltstellung nur möglich, wenn die Parksperre (und die gesetzlich vorgeschriebene Parkbremse) gelöst sind. Im Übrigen wird auf die obige Beschreibung zu der Parksperrenvorrichtung verwiesen.

Der hier vorgeschlagene Antriebsstrang des Kraftfahrzeugs umfasst ein Getriebe, welches eine solche Parksperrenvorrichtung aufweist, mit welcher sowohl die Fahrt-Position (freier Zustand) als auch die Park-Position (sperrender Zustand) passiv, also ohne externe Energieaufnahme, haltbar ist. Das Getriebe ist mit gleichem Bauraum und mit nur geringfügigen Zusatzkosten im Vergleich zu einer Parksperrenvorrichtung ohne die Möglichkeit zur Entriegelung ausführbar. Zudem ist die Sicherheit hoch, dass das Kraftfahrzeug nur dann in Betrieb genommen wird, solange die Parksperrenvorrichtung entriegelt ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: ein Sperrmechanismus einer Parksperre im sperrenden Zustand;
- Fig. 2:: ein Betätigungsaktuator mit einem Betätigungselement in Fahrt-Position;
- Fig. 3:: der Betätigungsaktuator gemäß Fig. 2 mit Entriegelungselement in der entriegelnden Position;
- Fig. 4:: der Betätigungsaktuator gemäß Fig. 2 und Fig. 3 mit Entriegelungselement in normaler Position (Parken); und
- Fig. 5:: ein Antriebsstrang mit einer Parksperrenvorrichtung in einem Kraftfahrzeug.

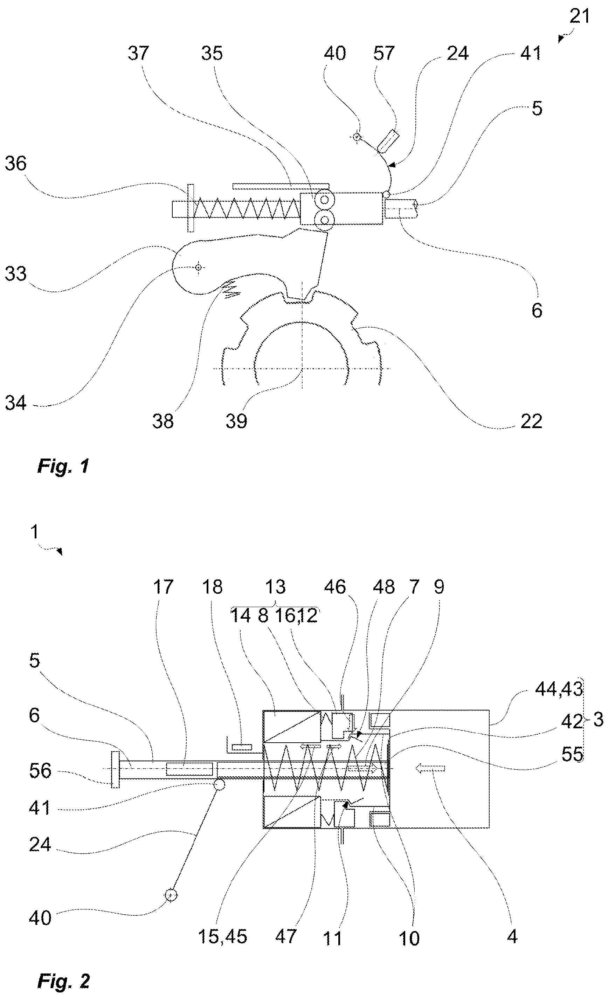

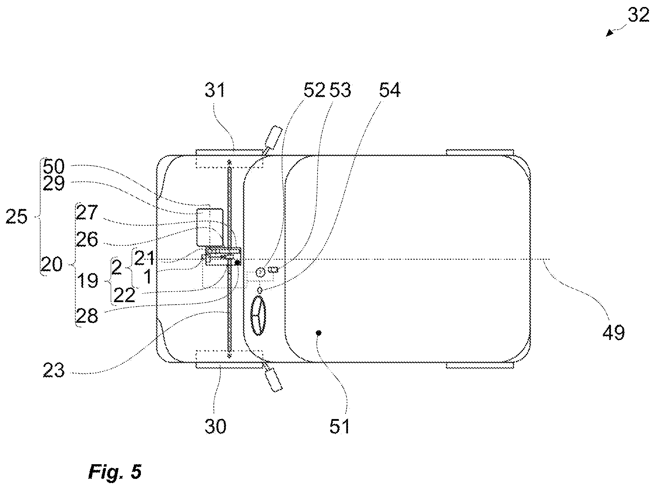

In Fig. 1 ist ein Sperrmechanismus **21** einer Parksperre **2** (vergleiche Fig. 5) in einer normal-sperrenden Konfiguration in einem sperrenden Zustand in einer schematischen Seitenansicht mit einem Sperrenrad **22** dargestellt. Der Sperrmechanismus **21** umfasst eine Parksperrenklinke **33,** welche um ihre Klinkenachse **34** rotierbar gelagert ist und hier im sperrenden Zustand gezeigt ist. Wenn der Sperrmechanismus **21** in den sperrenden Zustand überführt ist, greift die Parksperrenklinke **33** formschlüssig in das Sperrenrad **22** ein, sodass das Sperrenrad **22** blockiert ist. Dann ist eine Traverse **35** von einer Vorspannfeder **36** (hier als Druckfeder dargestellt) in eine solche Position gezwungen, dass hier (rein optional mittels der Abstützung der Traverse **35** an einem festen Gestell **37,** beispielsweise Bestandteil eines Getriebegehäuses **27,** vergleiche Fig. 5) die Parksperrenklinke **33** in dem sperrenden Zustand (Zahn-in-Lücke-Eingriff an dem Sperrenrad **22**) geometrisch blockiert ist. In einem hier nicht gezeigten freien Zustand der Traverse **35** ist die Vorspannfeder **36** gespannt (hier darstellungsgemäß nach links zusammengedrückt). Bei dieser Ausführungsform wird die Parksperrenklinke **33** mittels einer Freistellfeder **38** (beispielsweise eine Schenkelfeder oder Druckfeder) aus einer Zahnlücke des Sperrenrads **22** herausgehoben.

In dem normalen Zustand ist die Parksperrenklinke **33** einzig derart aus dem eingreifenden (sperrenden) Zustand in den freien Zustand überführbar, indem ein Betätigungselement **5** (hier darstellungsgemäß rechts angedeutet) eines Betätigungsaktuators **1** aktiv mit einer Axialkraft **4** entgegengesetzt der Vorspannung mittels der Vorspannfeder **36** gegen die Traverse **35** wirkt (darstellungsgemäß nach links) und die Vorspannfeder **36** spannt. Der Betätigungsaktuator **1** ist beispielsweise wie in Fig. 2 bis Fig. 4 gezeigt ausgeführt. Die Parksperrenklinke **33** bleibt also, solange die Traverse **35** von dem Betätigungselement **5** des Betätigungsaktuators **1** ausgelenkt ist, in dem freien Zustand und das Sperrenrad **22** ist frei um seine Radachse **39** rotierbar.

In dieser vorteilhaften Ausführungsform umfasst die Parksperre **2** rein optional weiterhin ein Entriegelungselement **24,** welches in der gezeigten Ausführungsform ein um eine Schwenkachse **40** verschwenkbarer Hebel ist. Rein optional verläuft die Schwenkachse **40** senkrecht zu der Betätigungsachse **6.** Das hier gezeigte Entriegelungselement **24** wirkt mit seiner Betätigungsspitze **41** (rein optional unmittelbar) auf die Traverse **35,** sodass bei dieser Ausführungsform mit einem Schwenken im Uhrzeigersinn um die Schwenkachse **40** die Parksperrenklinke **33** aus dem eingreifenden (sperrenden) Zustand in den freien Zustand überführbar ist. Das Betätigungselement **5** kann dabei in seiner Park-Position verbleiben.

Rein optional ist zusätzlich ein Feststellelement **57** vorgesehen, beispielsweise ein selbsthemmender Gewindestift, welcher in einem Gewinde in einem Getriebegehäuse **27** (vergleiche Fig. 5) bewegbar geführt ist. Das Feststellelement **57** steht mit dem Entriegelungselement **24** in kraftübertragenden Kontakt. Wenn das Feststellelement **57** aus der gezeigten Lage des Feststellelements **57** heraus bewegt wird (beispielsweise mittels Einschrauben des Feststellelements **57** in das Getriebegehäuse **27**), wird das Entriegelungselements **24** aus der gezeigten normalen Position in die entriegelnde Position gezwungen. Dann wird die Traverse **35** entgegen der Vorspannung der Vorspannfeder **36** ausgelenkt und die Parksperrenklinke **33** verlässt die Zahn-in-Lücke-Stellung und das Sperrenrad **22** wird frei um die Radachse **39** drehbar. Der Sperrmechanismus **21** nimmt also den freien Zustand ein, welcher mit dem Energiespeicherelement (gesichert über das Feststellelement **57**) in der entriegelnden Position gehalten wird. In der gezeigten Ausführungsform kann das Betätigungselement **5** davon unabhängig in der Park-Position verbleiben beziehungsweise zurückgeführt werden.

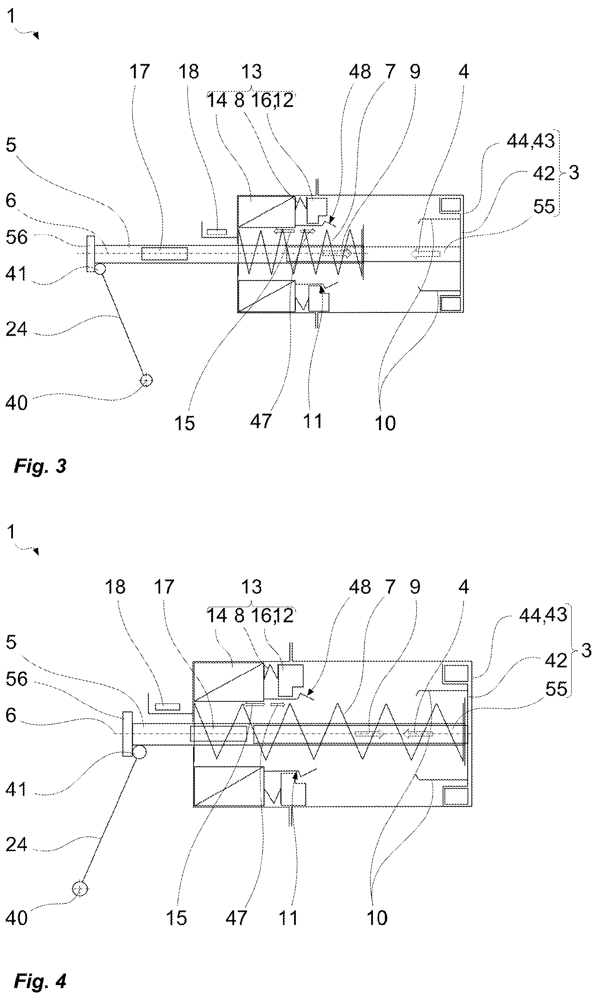

In Fig. 2 ist ein Betätigungsaktuator **1** mit einem Betätigungselement **5** in Fahrt-Position in einer schematischen Schnittansicht dargestellt. Der Betätigungsaktuator **1** ist beispielsweise zum Betätigen eines Sperrmechanismus **21** gemäß Fig. 1 eingerichtet. Das Betätigungselement **5** ist entlang einer Betätigungsachse **6** aktiv mittels eines Axialtriebmittels **3** bewegbar, sodass darstellungsgemäß das Betätigungselement **5** von rechts nach links bewegbar ist. Das Axialtriebmittel **3** ist hier als fluidische, bevorzugt hydraulische, Nehmereinheit ausgeführt. Dabei wird ein Nehmerkolben **42** in einem Nehmerzylinder **43** (Gegenlager **44**) von einem Fluid gesteuert von einer (normalen) Park-Position in eine (ausgelenkte) Fahrt-Position gedrückt. Die resultierende Axialkraft **4** zwingt somit das Betätigungselement **5** darstellungsgemäß nach links. Hierbei ist von dem Nehmereinheit keine Zugkraft auf das Betätigungselement **5** übertragbar. Vielmehr ist das Betätigungselement **5** mittels eines ersten Energiespeicherelements **7** (hier einer koaxial zu der Betätigungsachse **6** angeordneten Schraubendruckfeder) darstellungsgemäß nach rechts vorgespannt. Es ist also von dem ersten Energiespeicherelement **7** eine zu der Axialkraft **4** antagonistische Speicherkraft **9** auf den Nehmerkolben **42** und somit auf das Betätigungselement **5** ausgeübt. Ohne externe Energieaufnahme (hier in Form von einem fluidischen Druck) wird von dem Betätigungselement **5** also (passiv) die normale Position (vergleiche Fig. 4) eingenommen.

Hier ist ein Stopperelement **10** vorgesehen, welches mit dem Axialtriebmittel **3** fest verbunden ist. Das Stopperelement **10** ist hier als Rastelement, genauer als (Mehrzahl von) Federlaschen, mit einer Kontaktstelle ausgeführt. Die korrespondierende Stopperkomponente **11** ist mit dem Gegenlager **44** des Axialtriebmittels **3** fest verbunden. Die Stopperkomponente **11** ist hier als komplementäre Rastaufnahme ausgeführt, wobei die Kontaktstelle des Stopperelements **10** mittels eines entsprechenden Hinterschnitts haltbar ist. Das Stopperelement **10** gleitet also, wenn eine ausreichende Axialkraft **4** des Axialtriebmittels **3** anliegt, in die hier als Hinterschnitt ausgeführte Stopperkomponente **11** hinein (Formschluss), bevorzugt nach Art eines Schnappverschlusses. Die Stopperkraft **45** ist hierbei derart gering, dass damit allein keine Sicherung gegen die Speicherkraft **9** des ersten Energiespeicherelements **7** erzeugbar ist. Vielmehr ist die Speicherkraft **9** derart groß, dass die Verbindung zwischen dem Stopperelement **10** und der Stopperkomponente **11** damit lösbar ist, sodass das Betätigungselement **5** passiv in die Park-Position überführt wird. Wenn keine ausreichende Axialkraft **4** erzeugt ist, gleitet das Stopperelement **10** aus der Stopperkomponente **11** heraus und das Betätigungselement **5** nimmt die Park-Position ein.

Weil in einem Kraftfahrzeug **32** die Fahrt-Position im Betrieb ein dauerhafter Zustand ist, ist hier eine geringe oder keine externe Energieaufnahme gewünscht. Dafür ist hier ein Halteelement **12** vorgesehen. Mittels des Halteelements **12** ist das Stopperelement **10** (zumindest zusätzlich) gegen ein Herausgleiten während der Fahrt-Position gesichert, hier mittels Formschluss (Schnappverschluss). Die Haltekraft **46** des Halteelements **12** ist ausreichend, um die Verbindung zwischen dem Stopperelement **10** und der Stopperkomponente **11** entgegen der Speicherkraft **9** des ersten Energiespeicherelements **7** zu fixieren.

Das Halteelement **12** selbst ist bei dieser Ausführungsform mittels eines zweiten Energiespeicherelements **8** in die gezeigte sperrende Stellung mittels einer Vorhaltekraft **47** vorgespannt und sichert so die Kontaktstelle der Federlasche (Stopperelement **10**) in der Rastiernut (Stopperkomponente **11**). Wenn die Spule **14** des Hubmagnets **13** bestromt wird, wird ein solches Magnetfeld erzeugt, dass eine in Richtung der Axialkraft **4** weisende Magnetkraft **15** auf den Hubkolben **16** und somit auf das damit einstückig gebildete Halteelement **12** aufgebracht wird. Die Vorhaltekraft **47** wird überwunden und das Stopperelement **10** löst sich von der Stopperkomponente **11,** wenn eine ausreichend geringe (beispielsweise eine vernachlässigbare) Axialkraft **4** aufgebracht ist. Infolge der Speicherkraft **9** des ersten Energiespeicherelements **7** wird das Betätigungselement **5** wieder in die Park-Position überführt.

Weiterhin ist in der gezeigten Ausführungsform (rein optional) ein Magnetfeldsensor **18** und ein Positionsmagnet **17** (Permanentmagnet) vorgesehen, wobei der Magnetfeldsensor **18** relativ zu dem Gegenlager **44** des Axialtriebmittels **3** fixiert ist und der Positionsmagnet **17** in das Betätigungselement **5** integriert ist.

Damit ist die Position des Betätigungselements **5** elektronisch erfassbar beziehungsweise ermittelbar.

Weiterhin ist in der gezeigten Ausführungsform (rein optional) das Betätigungselement **5** separat von dem Axialtriebmittel **3** gebildet, hier dem Nehmerkolben **42.** Dies ist vorteilhaft, wenn der Sperrmechanismus **21** entriegelt werden soll. Dann kann der Nehmerkolben **42** in die der Park-Position entsprechende (passive) Stellung zurückkehren, während sich das Betätigungselement **5** noch in der Fahrt-Position befindet. In einer Ausführungsform ist das Betätigungselement **5** ausschließlich mittels des Axialtriebmittels **3** in die (ausgelenkte) Fahrt-Position überführbar. In der gezeigten Ausführungsform ist (rein optional) zusätzlich ein Entriegelungselement **24** vorgesehen. Mittels des Entriegelungselements **24** ist von außen (beispielsweise über eine Schraube oder einen Druckknopf) das Betätigungselement **5** in die Fahrt-Position überführbar. Dies ist vorteilhaft, weil dadurch der Magnetfeldsensor **18** mitgenutzt werden kann. Damit ist eine Anzeige oder eine elektronische Sperrung einer Inbetriebnahme eines Kraftfahrzeugs **32** (beispielsweise über den Bordcomputer des Kraftfahrzeugs **32**) einfach umsetzbar.

Gemäß der vorliegenden Erfindung umfasst das Axialtriebmittel **3** einen Führungsstift **55**, welcher bevorzugt koaxial zu der Betätigungsachse **6** angeordnet und mit dem Axialtriebmittel **3** fest verbunden ist. Der Führungsstift **55** taucht in der hier gezeigten Park-Position vollständig in das gemäß der Erfindung hülsenartige Betätigungselement **5** ein und dient in der gezeigten Ausführungsform lediglich der Führung des Betätigungselements **5.** In Fig. 3 ist der Betätigungsaktuator **1** gemäß Fig. 2 mit Entriegelungselement **24** in der entriegelnden Position gezeigt. Ohne Ausschluss der Allgemeinheit und rein der Übersichtlichkeit halber ist die gezeigte Figur weitestgehend mit der in Fig. 2 gezeigten Ausführungsform identisch, sodass insoweit auf die dortige Beschreibung verwiesen wird.

Hier ist nun im Vergleich zu Fig. 2 das Entriegelungselement **24** um seine Schwenkachse **40** (hier gegen den Uhrzeigersinn) nach darstellungsgemäß links in die entriegelnde Position verschenkt worden. In einem Anwendungsfall befindet sich ein Kraftfahrzeug **32** (vergleiche Fig. 5) in einem Passivzustand (entladene Versorgungsquelle) und, um den Sperrmechanismus **21** in den freien Zustand zu überführen und das Kraftfahrzeug **32** rollbar zu machen, ist (beispielsweise von Hand) das Entriegelungselement **24** in die entriegelnde Position überführt. Mittels des Entriegelungselements **24** ist infolge des kraftübertragenden Kontakts von der Betätigungsspitze **41** des Entriegelungselements **24** mit dem Betätigungskopf **56** des Betätigungselements **5,** das Betätigungselement 5 entgegen der Speicherkraft 9 des ersten Energiespeicherelements **7** in die Fahrt-Position überführt und/oder dort gehalten. Das Axialtriebmittel **3** kann in jene der Park-Position entsprechenden Lage verbleiben oder dorthin zurückkehren. Es sei darauf hingewiesen, dass das Betätigungselement **5** nicht mittels des Stopperelements **10,** der Stopperkomponente **11** und des Halteelements **12** gehalten ist. Bei der gezeigten Ausführungsform ist das Stopperelement **10** nämlich mit dem Nehmerkolben **42** fest verbunden und also ebenfalls in einer der Park-Position entsprechenden Lage.

Der in dem Hülsen-artigen Betätigungselement **5** angeordnete Positionsmagnet **17** ist beim Übergang von der Park-Position in die Fahrt-Position durch den Überwachungsbereich des Magnetfeldsensors **18** gefahren, beziehungsweise befindet sich in dem gezeigten Zustand noch in dem Überwachungsbereich, sodass bei einer (Wieder)-Inbetriebnahme des Kraftfahrzeugs **32** ein Aktiv-Signal ausgegeben ist und das Kraftfahrzeug **32** sich in Fahrt-Position befindet. Damit ist von dem Magnetfeldsensor **18** die Fahrt-Position eindeutig erkennbar, auch wenn diese Fahrt-Position von dem Entriegelungselement **24** verursacht ist und nicht von dem Axialtriebmittel **3.**

In Fig. 4 ist der Betätigungsaktuator **1** gemäß Fig. 2 und Fig. 3 mit Entriegelungselement **24** in normaler Position (Parken) und Betätigungselement **5** in Park-Position gezeigt. Ohne Ausschluss der Allgemeinheit und rein der Übersichtlichkeit halber ist die gezeigte Figur weitestgehend mit der in Fig. 2 und Fig. 3 gezeigten Ausführungsform identisch, sodass insoweit auf die dortige Beschreibung verwiesen wird.

Hier ist also das Axialtriebmittel **3** (wie in Fig. 3) in jener der Park-Position entsprechenden Lage und auch das Betätigungselement **5** in der Park-Position, während das Entriegelungselement **24** wieder (nach darstellungsgemäß rechts) in die normale Position überführt ist. Der Magnetfeldsensor **18** erfasst dann bei der Bewegung zwischen dem Zustand nach Fig. 3 in den hier gezeigten Zustand das Durchwandern des Magnetfelds des Positionsmagnets **17.** Es ist damit sichergestellt und elektronisch erfassbar und in eine entsprechende Steuerung einbindbar, dass das Entriegelungselement **24** sich in der normalen Position befindet. Die normal-sperrende Konfiguration der Parksperre **2** ist wieder sichergestellt beziehungsweise bei dieser bistabilen Ausführungsform sichergestellt, dass nach Einnehmen der Fahrt-Position mittels des Axialtriebmittels **3** bei einem Lösen des Halteelements **12** das erste Energiespeicherelement **7** sich wieder entspannt und auch das Betätigungselement **5** in die Park-Position zurück überführt ist. Mit anderen Worten, es wird sicher kein falsches Signal ausgegeben, wenn das Halteelement **12** gelöst wird, weil stets die tatsächliche Lage des Betätigungselements **5** (elektronisch) erfasst wird.

In Fig. 5 ist rein schematisch ein Kraftfahrzeug **32** mit einem Antriebsstrang **25** in einer Draufsicht gezeigt, wobei eine Antriebsmaschine **29,** hier optional als elektrische Antriebsmaschine **29** dargestellt, senkrecht zu einer Längsachse **49,** entlang einer Motorachse **50** angeordnet ist. Die Motorachse **50** ist in Fahrtrichtung vor einer Fahrerkabine **51** des Kraftfahrzeugs **32** angeordnet. Der Antriebsstrang **25** ist zum Vortrieb des Kraftfahrzeugs **32** mittels Antreiben eines linken Vortriebsrads **30** und eines rechten Vortriebsrads **31** (hier optional der Vorderachse des Kraftfahrzeugs **32**) mittels einer Drehmomentabgabe von der Antriebsmaschine **29** über ein Getriebe **20** eingerichtet, und so ein gestrichelt dargestellter Drehmomentfluss **23** (hier mit der Richtung entsprechend einem Zugmoment dargestellt) gebildet. Beispielsweise ist ein Drehmomentübertragungsgetriebe **26** ein Teil eines Getriebes **20,** welches mittels eines Getriebeschalthebels **52** in der Fahrerkabine **51** von einem Fahrzeugfahrer schaltbar ist.

In dem Drehmomentfluss **23** ist nun eine Parksperrenvorrichtung **19** angeordnet, womit das linke Vortriebsrad **30** und das rechte Vortriebsrad **31** blockierbar sind. Die Parksperrenvorrichtung **19** umfasst ein Sperrenrad **22,** beispielsweise ein Getrieberad des Drehmomentübertragungsgetriebes **26** des Getriebes **20** oder ein zusätzliches Rad des Drehmomentübertragungsgetriebes **26,** und eine Parksperre **2,** wobei die Parksperre **2** einen Sperrmechanismus **21** und einen Betätigungsaktuator **1** umfasst. Der Sperrmechanismus **21** ist beispielsweise wie in Fig. 1 dargestellt ausgeführt. Hier ist eine Ausführungsform der Parksperrenvorrichtung **19** gezeigt, bei welcher (optional) der Sperrmechanismus **21** innerhalb des Getrieberaums **28** in einem Getriebegehäuse **27** des Getriebes **20** und der Betätigungsaktuator **1** außerhalb des Getriebegehäuses **27** angeordnet ist.

Das Sperrenrad **22** ist in dem Drehmomentfluss **23** derart angeordnet, dass dadurch ein Wegrollen des Kraftfahrzeugs **32** verhinderbar ist. Die Parksperrenvorrichtung **19** ist hier mit zumindest einem der folgenden Bedienelemente betätigbar:
- von einem Getriebeschalthebel **52,** beispielsweise mittels einer Parkschaltstellung "P",
- einem Parkhebel **53**; und/oder
- einem Zündknopf **54** (alternativ einem Zündschlüssel).

Weiterhin ist bevorzugt die Parksperrenvorrichtung **19** automatisiert betätigbar beispielsweise wird beim Verlassen des Kraftfahrzeugs **32** (beispielsweise nach Abschließen) die Parksperre **2** selbsttätig eingelegt.

Mit dem hier vorgeschlagenen Betätigungsaktuator ist mit geringem konstruktivem Aufwand und geringer Bauraumanforderung ein Entriegeln einer normal-sperrenden Parksperre ermöglicht und gleichzeitig diese Entriegelung sicher erfassbar.

**Bezugszeichenliste**

| | | | |
|---|---|---|---|
| 1 | Betätigungsaktuator | 32 | Kraftfahrzeug |
| 2 | Parksperre | 33 | Parksperrenklinke |
| 3 | Axialtriebmittel | 34 | Klinkenachse |
| 4 | Axialkraft | 35 | Traverse |
| 5 | Betätigungselement | 36 | Vorspannfeder |
| 6 | Betätigungsachse | 37 | Gestell |
| 7 | erstes Energiespeicherelement (Stößel) | 38 | Freistellfeder |
| | | 39 | Radachse |
| 8 | zweites Energiespeicherelement (Halteelement) | 40 | Schwenkachse |
| | | 41 | Betätigungsspitze |
| 9 | Speicherkraft | 42 | Nehmerkolben |
| 10 | Stopperelement | 43 | Nehmerzylinder |
| 11 | Stopperkomponente | 44 | Gegenlager |
| 12 | Halteelement | 45 | Stopperkraft |
| 13 | Hubmagnet | 46 | Haltekraft |
| 14 | Spule | 47 | Vorhaltekraft |
| 15 | Magnetkraft | 48 | Rampe |
| 16 | Hubkolben | 49 | Längsachse |
| 17 | Positionsmagnet | 50 | Motorachse |
| 18 | Magnetfeldsensor | 51 | Fahrerkabine |
| 19 | Parksperrenvorrichtung | 52 | Getriebeschalthebel |
| 20 | Getriebe | 53 | Parkhebel |
| 21 | Sperrmechanismus | 54 | Zündknopf |
| 22 | Sperrenrad | 55 | Führungsstift |
| 23 | Drehmomentfluss | 56 | Betätigungskopf |
| 24 | Entriegelungselement | 57 | Feststellelement |
| 25 | Antriebsstrang | | |
| 26 | Drehmomentübertragungsgetriebe | | |
| 27 | Getriebegehäuse | | |
| 28 | Getrieberaum | | |
| 29 | Antriebsmaschine | | |
| 30 | linkes Vortriebsrad | | |
| 31 | rechtes Vortriebsrad | | |

## Patentansprüche

1. Betätigungsaktuator (1) für eine Parksperre (2), aufweisend zumindest die folgenden Komponenten:
- ein Axialtriebmittel (3) zum Übertragen einer Axialkraft (4);
- ein Betätigungselement (5) mit einer Betätigungsachse (6), welches mittels der Axialkraft (4) des Axialtriebmittels (3) von einer Park-Position in eine Fahrt-Position axial bewegbar ist;
- ein erstes Energiespeicherelement (7) zum Übertragen einer zu der Axialkraft (4) antagonistischen Speicherkraft (9), wobei das freie, nicht fixierte Betätigungselement (5) von der Speicherkraft (9) in Richtung der Park-Position gezwungen wird,
wobei der Betätigungsaktuator so ausgestaltet ist, dass das Betätigungselement (5) unabhängig von dem Axialtriebmittel (3) in der Fahrt-Position fixierbar ist
**dadurch gekennzeichnet, dass**
das Axialtriebmittel (3) einen Führungsstift (55) umfasst,
das Betätigungselement (5) hülsenartig ausgeführt, vorzugsweise eine Hülse ist,
und das hülsenartige Betätigungselement (5) von dem Führungsstift (55) geführt ist.

2. Betätigungsaktuator (1) nach Anspruch 1, wobei
der Führungsstift (55) in der Park-Position vollständig in das hülsenartige Betätigungselement (5) eintaucht.

3. Betätigungsaktuator (1) nach Anspruch 1 oder Anspruch 2, wobei
der Betätigungsaktuator (1) weiterhin zumindest die folgenden Komponenten aufweist:
- ein Stopperelement (10);
- eine zu dem Stopperelement (10) korrespondierende Stopperkomponente (11); sowie
- ein Halteelement (12), welches zwischen einer gelösten Stellung und einer sperrenden Stellung bewegbar ist, wobei während sich das Betätigungselement (5) in der Fahrt-Position befindet mit dem Halteelement (12) in der sperrenden Stellung das Stopperelement (10) und die Stopperkomponente (11) zueinander fixiert sind,
wobei mittels des durch das Halteelement (12) in der sperrenden Stellung fixierten Stopperelements (10), das Betätigungselement (5) entgegen der Speicherkraft (9) des ersten Energiespeicherelements (7) in der Fahrt-Position gehalten ist.

4. Betätigungsaktuator (1) für eine Parksperre (2) nach Anspruch 3, aufweisend zumindest die folgenden Komponenten:
weiterhin ein Hubmagnet (13) mit einer Spule (14) und einem mittels einer von der Spule (14) erzeugbaren Magnetkraft (15) axial bewegbaren Hubkolben (16) vorgesehen ist,
wobei das Halteelement (12) mit dem axial bewegbaren Hubkolben (16) fest verbunden ist.

5. Betätigungsaktuator (1) nach einem der vorhergehenden Ansprüche, wobei das hülsenartige Betätigungselement (5) einen Positionsmagneten (17) für einen Magnetfeldsensor (18) umfasst.

6. Parksperre (2) für eine Parksperrenvorrichtung (19) eines Getriebes (20), aufweisend zumindest die folgenden Komponenten:
- einen Sperrmechanismus (21) zum Sperren eines Sperrenrads (22) in einem Drehmomentfluss (23), wobei im Einsatz von dem Sperrmechanismus (21) in einem sperrenden Zustand das Sperrenrad (22) blockiert und in einem freien Zustand das Sperrenrad (22) freigegeben ist;
- einen Betätigungsaktuator (1) nach einem der vorhergehenden Ansprüche, wobei in der Fahrt-Position des hülsenartigen Betätigungselements (5) der Sperrmechanismus (21) aus dem sperrenden Zustand herausgeführt ist und wobei die Park-Position des Betätigungselements (5) dem sperrenden Zustand des Sperrmechanismus (21) entspricht;
- ein vom Betätigungsaktuator (1) umfasstes Rastelement (10) und eine komplementäre Rastaufnahme (11) zum Halten des Betätigungselements (5) in der Fahrt-Position; wobei
- das Rastelement (10) fest mit dem Axialtriebmittel (3) verbunden ist,
- ein vom Axialtriebmittel (3) unabhängig betätigbares Entriegelungselement (24), welches zwischen einer normalen Position und einer entriegelnden Position bewegbar ist, wobei in der entriegelnden Position der freie Zustand des Sperrmechanismus (21) gehalten ist und in der normalen Position die normal-sperrende Funktion der Parksperre (2) sichergestellt ist,
- das Entriegelungselement (24) das hülsenartige Betätigungselement (5) aus der Park-Position in die Fahrt-Position bewegt und
- das Rastelement (10) mit dem Axialtriebmittel (3) fest verbunden ist und sowohl Rastelement (10), als auch Axialtriebmittel (3) in eine der Park-Position entsprechenden Lage verbleiben oder zurückkehren, wenn das hülsenartige Betätigungselement (5) vom Entriegelelungselement (24) in der Fahrt-Position gehalten ist.

7. Parksperrenvorrichtung (19), aufweisend
ein Sperrenrad (22) zum Anordnen in einem sperrbaren Drehmomentfluss (23) und eine Parksperre (2) nach Anspruch 6, wobei das Sperrenrad (22) mittels des Sperrmechanismus (21) blockierbar ist.

8. Getriebe (20) für einen Antriebsstrang (25), aufweisend zumindest die folgenden Komponenten:
- eine Parksperrenvorrichtung (19) nach Anspruch 7;
- ein Drehmomentübertragungsgetriebe (26), welches das Sperrenrad (22) umfasst; und
- ein Getriebegehäuse (27), welches einen Getrieberaum (28) umgibt,
wobei der Sperrmechanismus (21) der Parksperre (2), bevorzugt vollständig, besonders bevorzugt die gesamte Parksperrenvorrichtung (19), in dem Getrieberaum (28) angeordnet ist.

9. Antriebsstrang (25), aufweisend zumindest die folgenden Komponenten:
- zumindest eine Antriebsmaschine (29) zum Abgeben eines Drehmoments;
- zumindest einen Verbraucher (30,31) zum Aufnehmen eines Drehmoments; und
- ein Getriebe (20) nach Anspruch 8,
wobei die zumindest eine Antriebsmaschine (29) und der zumindest eine Verbraucher (30,31) mittels des Getriebes (20) drehmomentübertragend miteinander verbunden sind,
wobei ein Drehmomentübertragen zwischen der Antriebsmaschine (29) und dem zumindest einen Verbraucher (30,31) mittels der Parksperrenvorrichtung (19) in dem sperrenden Zustand des Sperrmechanismus (21) unterbunden ist.

10. Kraftfahrzeug (32), aufweisend
zumindest ein Vortriebsrad (30,31) und einen Antriebsstrang (25) nach Anspruch 9,
wobei zum Vortrieb des Kraftfahrzeugs (32) ein Drehmoment von der zumindest einen Antriebsmaschine (29) des Antriebsstrangs (25) an das zumindest eine Vortriebsrad (30,31) abgebbar ist, und
ein Rollen des Kraftfahrzeugs (32) mittels der Parksperrenvorrichtung (19) in dem sperrenden Zustand des Sperrmechanismus (21) unterbunden ist.

## Claims

1. An actuator (1) for a parking lock (2), comprising at least the following components:
- an axial drive means (3) for transmitting an axial force (4);
- an actuating element (5) with an actuating axis (6), which is axially moveable from a parking position into a drive position by means of the axial force (4) of the axial drive means (3);
- a first energy storage element (7) for transmitting a stored force (9) antagonistic to the axial force (4), wherein the free, non-fixed actuating element (5) is forced by the stored force (9) in the direction of the parking position, wherein the actuator is designed such that the actuating element (5) can be fixed in the drive position independently of the axial drive means (3)
**characterised in that**
the axial drive means (3) comprises a guide pin (55),
the actuating element (5) is designed to be sleeve-like, preferably being a sleeve,
and the sleeve-like actuating element (5) is guided by the guide pin (55).

2. The actuator (1) according to claim 1, wherein the guide pin (55) is fully inserted into the sleeve-like actuating element (5) in the parking position.

3. The actuator (1) according to claim 1 or claim 2, wherein the actuator (1) further comprises at least the following components:
- a stopper element (10);
- a stopper component (11) corresponding to the stopper element (10); and
- a holding element (12) which is movable between a released position and a locking position, wherein, when the actuating element (5) is in the drive position with the holding element (12) in the locking position, the stopper element (10) and the stopper component (11) are fixed relative to one another, wherein the actuating element (5) is held in the drive position against the storage force (9) of the first energy storage element (7) by means of the stopper element (10) fixed in the locking position by the holding element (12).

4. The actuator (1) for a parking lock (2) according to claim 3, comprising at least the following components:
a solenoid (13) with a coil (14) and with a piston (16) that is axially moveable by means of a magnetic force (15) generated by the coil (14) is also provided, wherein the holding element (12) is fixedly connected to the axially moveable piston (16).

5. The actuator (1) according to one of the preceding claims, wherein the sleeve-like actuating element (5) comprises a position magnet (17) for a magnetic field sensor (18).

6. A parking lock (2) for a parking lock device (19) of a transmission (20), comprising at least the following components:
- a locking mechanism (21) for locking a locking wheel (22) in a torque flow (23), wherein, when the locking mechanism (21) is in a locking state, the locking wheel (22) is blocked and, in a free state, the locking wheel (22) is released;
- an actuator (1) according to one of the preceding claims, wherein, in the drive position of the sleeve-like actuating element (5), the locking mechanism (21) is moved out of the locking state and wherein the parking position of the actuating element (5) corresponds to the locking state of the locking mechanism (21);
- a latching element (10) encompassed by the actuator (1) and a complementary latching receptacle (11) for holding the actuating element (5) in the drive position; wherein
- the latching element (10) is fixedly connected to the axial drive means (3),
- a release element (24) that can be operated independently of the axial drive means (3) and is moveable between a normal position and a releasing position, wherein the free state of the locking mechanism (21) is maintained in the releasing position and the normal locking function of the parking lock (2) is guaranteed in the normal position,
- the release element (24) moves the sleeve-like actuating element (5) from the parking position to the drive position and
- the latching element (10) is fixedly connected to the axial drive means (3) and both the latching element (10) and the axial drive means (3) remain in or return to a position corresponding to the parking position, when the sleeve-like actuating element (5) is held by the release element (24) in the drive position.

7. A parking lock device (19), comprising a locking wheel (22) for arrangement in a lockable torque flow (23) and a parking lock (2) according to claim 6, wherein the locking wheel (22) can be blocked by means of the locking mechanism (21).

8. A transmission (20) for a drive train (25), comprising at least the following components:
- a parking lock device (19) according to claim 7;
- a torque transmitting transmission (26) comprising the locking wheel (22); and
- a transmission housing (27) which surrounds a transmission chamber (28), wherein the locking mechanism (21) of the parking lock (2), preferably completely, particularly preferably the entire parking lock device (19), is arranged in the transmission chamber (28).

9. A drive train (25), comprising at least the following components:
- at least one drive unit (29) for outputting a torque;
- at least one consumer (30, 31) for receiving a torque; and
- a transmission (20) according to claim 8,
wherein the at least one drive unit (29) and the at least one consumer (30, 31) are connected to one another in a torque-transmitting manner by means of the transmission (20),
wherein a torque transmission between the drive unit (29) and the at least one consumer (30, 31) is prevented by means of the parking lock device (19) in the locking state of the locking mechanism (21).

10. A motor vehicle (32), comprising at least one propulsion wheel (30, 31) and one drive train (25) according to claim 9,
wherein a torque can be transmitted from the at least one drive unit (29) of the drive train (25) to the at least one propulsion wheel (30, 31) in order to propel the motor vehicle (32), and
rolling of the motor vehicle (32) is prevented by means of the parking lock device (19) in the locking state of the locking mechanism (21).

## Revendications

1. Actionneur (1) pour un verrou de stationnement (2), présentant au moins les composants suivants :
- un moyen d'entraînement axial (3) pour transmettre une force axiale (4) ;
- un élément d'actionnement (5) avec un axe d'actionnement (6), qui peut être déplacé axialement d'une position de stationnement à une position de conduite au moyen de la force axiale (4) du moyen d'entraînement axial (3) ;
- un premier élément d'accumulation d'énergie (7) pour transmettre une force d'accumulation (9) antagoniste à la force axiale (4), l'élément d'actionnement (5) libre et non fixe étant repoussé par la force d'accumulation (9) en direction de la position de stationnement, l'actionneur étant conçu de façon que l'élément d'actionnement (5) puisse être fixé dans la position de conduite indépendamment du moyen d'entraînement axial (3)
**caractérisé en ce que**
le moyen d'entraînement axial (3) comprend une broche de guidage (55),
l'élément d'actionnement (5) est réalisé en forme de manchon, de préférence est un manchon,
et l'élément d'actionnement (5) en forme de manchon est guidé par la broche de guidage (55).

2. Actionneur (1) selon la revendication 1, dans lequel la broche de guidage (55) est complètement enfoncée dans l'élément d'actionnement (5) en forme de manchon dans la position de stationnement.

3. Actionneur (1) selon la revendication 1 ou la revendication 2, l'actionneur (1) présentant en outre au moins les composants suivants :
- un élément de butée (10) ;
- un composant de butée (11) correspondant à l'élément de butée (10) ; et
- un élément de maintien (12) qui est mobile entre une position libérée et une position de verrouillage, dans lequel pendant que l'élément d'actionnement (5) est dans la position de conduite avec l'élément de maintien (12) dans la position de verrouillage, l'élément de butée (10) et le composant de butée (11) sont fixés l'un à l'autre, l'élément d'actionnement (5) étant maintenu dans la position de conduite à l'encontre de la force d'accumulation (9) du premier élément d'accumulation d'énergie (7) au moyen de l'élément de butée (10) fixé dans la position de verrouillage par l'élément de maintien (12).

4. Actionneur (1) pour un verrou de stationnement (2) selon la revendication 3, présentant au moins les composants suivants :
en outre un aimant de levage (13) comportant une bobine (14) et un piston alternatif (16) mobile axialement au moyen d'une force magnétique (15) générée par la bobine (14) est prévu, dans lequel l'élément de maintien (12) est relié fermement au piston alternatif (16) mobile axialement.

5. Actionneur (1) selon l'une quelconque des revendications précédentes, dans lequel l'élément d'actionnement (5) en forme de manchon comprend un aimant de position (17) pour un capteur de champ magnétique (18).

6. Verrou de stationnement (2) pour un dispositif de verrou de stationnement (19) d'une boîte de vitesses (20), présentant au moins les composants suivants :
- un mécanisme de verrouillage (21) pour verrouiller une roue de verrouillage (22) dans un flux de couple (23), lorsque le mécanisme de verrouillage (21) est utilisé, la roue de verrouillage (22) étant bloquée dans un état de verrouillage et la roue de verrouillage (22) étant libérée dans un état libre ;
- un actionneur (1) selon l'une quelconque des revendications précédentes, dans lequel, dans la position de conduite de l'élément d'actionnement (5) en forme de manchon, le mécanisme de verrouillage (21) est sorti de l'état de verrouillage et dans lequel la position de stationnement de l'élément d'actionnement (5) correspond à l'état de verrouillage du mécanisme de verrouillage (21) ;
- un élément d'encliquetage (10) entouré par l'actionneur (1) et un logement d'encliquetage (11) complémentaire pour maintenir l'élément d'actionnement (5) dans la position de conduite ;
- l'élément d'encliquetage (10) étant relié fermement au moyen d'entraînement axial (3),
- un élément de déverrouillage (24) actionnable indépendamment par le moyen d'entraînement axial (3) et mobile entre une position normale et une position de déverrouillage, l'état libre du mécanisme de verrouillage (21) étant maintenu dans la position de déverrouillage et la fonction de verrouillage normale dans la position normale du verrou de stationnement (2) est assurée,
- l'élément de déverrouillage (24) déplace l'élément d'actionnement (5) en forme de manchon de la position de stationnement à la position de conduite et
- l'élément d'encliquetage (10) est fermement relié au moyen d'entraînement axial (3) et tant l'élément d'encliquetage (10) que le moyen d'entraînement axial (3) restent ou reviennent dans une position correspondant à la position de stationnement lorsque l'élément d'actionnement (5) en forme de manchon est maintenu dans la position de conduite par l'élément de déverrouillage (24).

7. Dispositif de verrou de stationnement (19), présentant une roue de verrouillage (22) pour un agencement dans un flux de couple (23) pouvant être verrouillé et un verrou de stationnement (2) selon la revendication 6, dans lequel la roue de verrouillage (22) peut être bloquée au moyen du mécanisme de verrouillage (21).

8. Boîte de vitesses (20) pour une chaîne cinématique (25), présentant au moins les composants suivants :
- un dispositif de verrou de stationnement (19) selon la revendication 7 ;
- une boîte de vitesses de transmission de couple (26) comprenant la roue de verrouillage (22) ; et
- un carter de boîte de vitesses (27) qui entoure un compartiment de boîte de vitesses (28), dans lequel le mécanisme de verrouillage (21) du verrou de stationnement (2), de préférence complètement, de manière particulièrement préférée, l'ensemble du dispositif de verrou de stationnement (19), est agencé dans le compartiment de boîte de vitesses (28).

9. Chaîne cinématique (25) présentant au moins les composants suivants :
- au moins une machine motrice (29) pour délivrer un couple ;
- au moins un consommateur (30, 31) pour recevoir un couple ; et
- une boîte de vitesses (20) selon la revendication 8,
dans laquelle l'au moins une machine motrice (29) et l'au moins un consommateur (30, 31) sont reliés l'un à l'autre de manière à transmettre le couple au moyen de la boîte de vitesses (20), une transmission de couple entre la machine motrice (29) et le ou les consommateurs (30, 31) étant empêchée au moyen du dispositif de verrou de stationnement (19) dans l'état de verrouillage du mécanisme de verrouillage (21).

10. Véhicule automobile (32) présentant au moins une roue de propulsion (30, 31) et une chaîne cinématique (25) selon la revendication 9,
dans lequel, pour propulser le véhicule automobile (32), un couple peut être délivré depuis l'au moins une machine motrice (29) de la chaîne cinématique (25) à l'au moins une roue de propulsion (30, 31), et
un roulage du véhicule automobile (32) est empêché au moyen du dispositif de verrou de stationnement (19) dans l'état de verrouillage du mécanisme de verrouillage (21).
